# EUROPEAN PATENT APPLICATION

(11) **EP 4 674 662 A1**
(43) Date of publication of application: **07.01.2026**
(21) Application number: 25186552.3
(22) Date of filing: 01.07.2025
(51) Int. Cl.: B60K 15/063, B60K 15/067, B60K 15/07

(54) **IMPROVED LOAD SUPPORT SYSTEM FOR A VEHICLE**

(30) Priority: 03.07.2024 IT 202400015334
(71) Applicant: On-Highway Brasil Ltda., 35703-138 Sete Lagoas, Minas Gerais (BR)
(72) Inventor: DOMINGOS DE SA, Thiago Malaquias, 35703-138 SETE LAGOAS (BR); DA COSTA LIMA NETO, Bernardo, 35703-138 SETE LAGOAS (BR)
(74) Representative: Studio Torta S.p.A.

(57) **Abstract**

Support system (6) for supporting at least a pair of tank assemblies (3) of a vehicle (1), the support system (6) comprising at least one stabilizing road (7) and a supporting structure (8), the said stabilizing road (7) being configured to connect together fixedly the tank assemblies (3), the support structure (8) being configured to connect in a movable manner the stabilizing road (7) to the chassis (2).

## Description

### CROSS-REFERENCE TO RELATED APPLICATIONS

This patent application claims priority from Italian patent application no. 102024000015334 filed on July 3, 2024, the entire disclosure of which is incorporated herein by reference.

### TECHNICAL FIELD

The present invention concerns a load support system for a vehicle, such as a heavy vehicle.

The present invention finds its preferred, although not exclusive, application in supporting cantilevered loads with respect to a chassis of a heavy vehicle such as a truck. Reference will be made to this application by way of example below.

### BACKGROUND OF THE INVENTION

Heavy vehicles such as trucks may be provided with one or more tank assemblies each comprising at least one tank configured to store operative fluids, such as pressurized gas, e.g. air for braking operative system, or fuel for operation of an internal combustion engine, or hydrogen, in case of fuel cell vehicle.

Usually, such tank assemblies are carried directly by the chassis via brackets that fixedly connects the tanks to one of the side members of the chassis.

As known, the side members are usually two and extends along a longitudinal axis of the vehicle and are connected by cross-members.

Clearly the aforementioned tank assemblies are particularly heavy and, moreover, each usually comprise more tanks that are usually connected together by a connection structure and fixed by the aforementioned brackets to the vehicle.

Moreover, usually, such tank assembly is carried cantilevered by the side members, in particular laterally cantilevered outside the side member to which it is fixed.

Accordingly, huge stresses are imparted to the chassis, in particular to the side members proximate to the bracket fixation points and, if present, in the cross-member positioned in the neighborhood of the brackets.

Such high stresses lead to useful life reduction of the chassis and increases the possibility of failures that could provide heavy damages to the vehicle and possible fatal injuries to the driver and peoples/goods in the vicinity of the vehicle.

Moreover, such loads may vary according to the quantity of fluid contained in the tank, thereby providing unbalances to the vehicle that could lead to the drivability thereof.

Known solutions foresees to increase thickness of the chassis or to increase the number of the cross-members. However, these solution increases weight, costs and fuel consumption of the vehicle and moreover reduce its useful space.

Therefore, the need is felt to improve the fixation of a tank assembly to the chassis of a vehicle for reducing the stresses imparted to the elements of the chassis, without increasing costs and reduce useful space on the vehicle.

An aim of the present invention is to satisfy the above mentioned needs in a cost-effective and optimized manner.

### SUMMARY OF THE INVENTION

The aforementioned aim is reached by a support system and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view with parts removed for sake of clarity of a vehicle comprising a support system according to the invention;
- Figure 2 is a perspective view of a support system according to the invention; and
- Figure 3 is an exploded perspective view of the support system of figure 2.

### DETAILED DESCRIPTION OF THE INVENTION

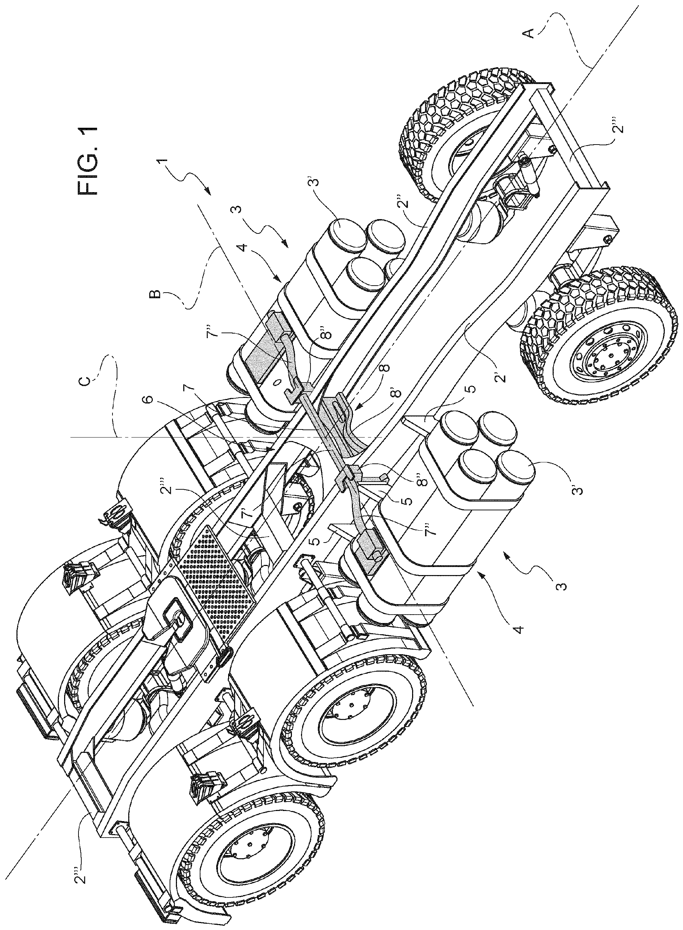

In figure 1 it is shown a heavy vehicle 1 such as a truck comprising a chassis 2 that is movable on the ground, e.g. via wheels, and extending along a longitudinal axis A.

As known, the chassis 2 comprises a pair of side members 2', 2", namely a right and a left side members 2', 2'' extending spaced along longitudinal axis A and preferably parallel one with respect to the other.

The chassis 2 further comprises a plurality of cross-members 2‴ extending along a transversal axis B perpendicular to the longitudinal axis A and connecting together the side members 2', 2''. As known, the cross-member is laterally comprised between the side members along transversal axis B.

The vehicle 1 further comprises at least one tank assembly 3 comprising one or more tanks 3' and carried by one between the first and second side members 2', 2ʺ.

The plurality of tanks 3' are connected together by a connection system 4, e.g. comprising bands or other rigid connection means to carry together the tanks 3'.

The tank assembly 3 is connected to the respective side member 2', 2'' via at least a pair of brackets 5 extending cantilevered from the side member 2', 2'' and configured to support directly the tanks 3' or the aforementioned connection system 4.

In the disclosed embodiment, the vehicle 1 comprises a pair of tank assemblies 3 each comprising a plurality of tanks 3' connected together by a connection system 4 and respective brackets 5 configured to fix each tank assembly 3 to the respective side member 2', 2ʺ.

According to the invention, the vehicle 1 comprises a support system 6 operatively connecting the two tank assemblies together in order to balance the load therebetween and the chassis 2.

In detail, the support system 6 is configured to balance the forces and torques acting between the tank assemblies along and about longitudinal, transversal and vertical axis A, B, C.

In particular, the support system 6 comprises a stabilizing road 7 and a support structure 8, the stabilizing road 7 is configured to be connected fixedly between the tank assemblies 3 while the support structure 8 is configured to movably connect the stabilizing road 7 to the chassis 2.

In detail, the stabilizing road 7 extends along transversal axis B and comprises a central portion 7' and a pair of terminal portions 7''. More advantageously, the stabilizing road 7 has a circular cross-section and preferably continuous along the transversal axis B.

In particular, the stabilizing road 7 is placed above the chassis 2 in a way that the central portion 7' is substantially comprised between the side members 2', 2'' and the terminal portions 7'' are placed laterally outside the side members 2', 2ʺ.

In detail, in a plane defined by longitudinal and transversal axis A, B, the stabilizing road 7 has a "Z/S" shape. In detail, the terminal portions 7'' are not coaxial with respect to the central portion 7' and in particular extends forwardly or rearwardly with respect to this latter, i.e. one opposite to the other with respect to central portion 7' along transversal axis B.

Accordingly, the central portion 7' is joint to the terminal portion 7'' via curved portions allowing the different position of the axis of each of them.

In detail, both the central portion 7' and the terminal portions 7'' extends along axes parallel to transversal axis B.

The support structure 8 comprises essentially a central portion 8' and a pair of brackets 8". The brackets 8'' are configured to be fixedly connected to the central portion 8' and are configured to movably support the stabilizing road 7.

In detail, the central portion 8' is configured to be placed between the side members 2', 2'' while the brackets 8'' are configured to be connected to the central portion 8' and are placed outside the side members 2', 2".

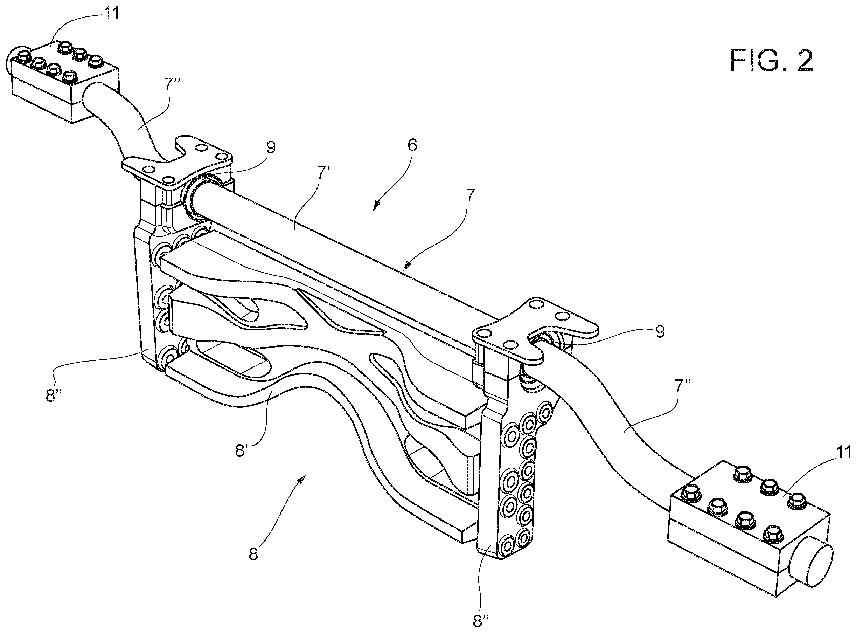

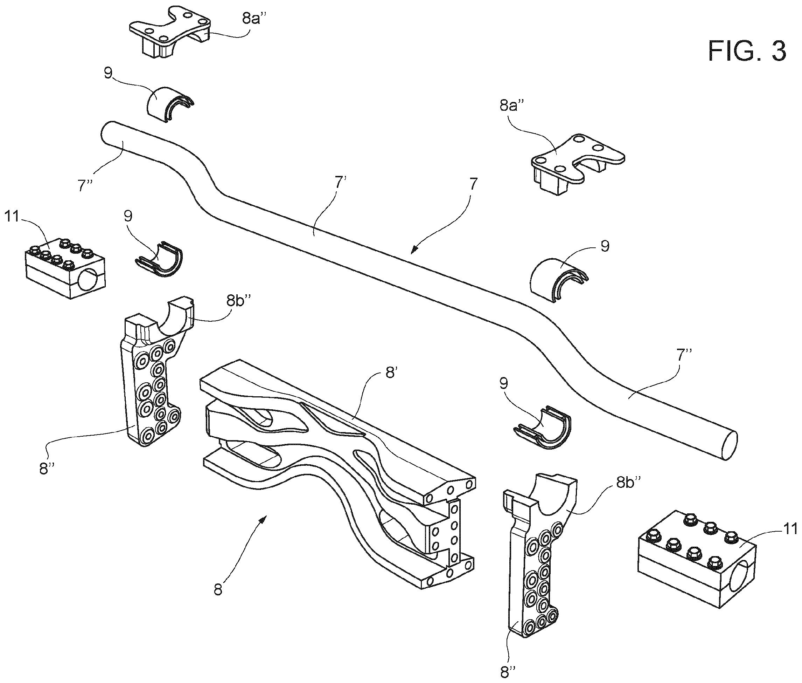

In detail, as better shown in figures 2 and 3, the brackets 8'' defines a plurality of holes configured to allow insertion of coupling elements, such as threaded means, within themselves, configured to pass through the side member 2', 2'' (not shown) and close within the central portion 8' that is provided with same holes (see figure 3).

The central portion 8' advantageously defines a plurality of holes configured to reduce the weight thereof; furthermore, in particular, it defines an upper side along vertical axis C that is substantially planar and a lower side along vertical axis C that is curved and in particular defines a "U"-shape profile with the opening directed towards grounds.

The brackets 8'' preferably defines a seat 9 configured to house in rotatably free manner the stabilizer road 7, in particular allowing rotation thereof about an axis parallel to transversal axis B. In detail, the seat 9 are located in correspondence of extremities of the central portion 7' of the stabilizer road 7.

In particular, each bracket 8'' comprises (see figure 3) a first portion 8b'' configured to allow the coupling to the side member 2', 2'' and a second portion 8a'' configured to be fixed to the first portion 8a, e.g. by coupling means as described above, to define seat 9.

Seat 9 may in particular comprise a bushing, that can be itself be realized in two portion connected together and respectively carried by the first and second portions 8b", 8a'' of the brackets 8''.

Support system 6 further comprises a coupling portion 11 carried by the stabilizing road 7 and configured to be fixedly secured to the tank assembly 3.

In detail, as schematized in the attached figures, coupling portion 11 can comprise a sleeve carried rigidly by the terminal portions 7'' of the stabilizing road 7 and configured to be fixed to a portion fixedly coupled to the tanks 3' or to the connection system 4, if present.

Clearly, different coupling portions 11 may be foreseen according to number, extension and typology of tanks provided that they allow a fixed connection between the tanks 3' and the terminal portion 7'' of the stabilizing road 7.

The operation of the embodiment of the invention as described above is the following.

During manufacturing of the vehicle, once tank assemblies 3 are connected to chassis 2, it is possible to connect the stabilizing road 7 to the supporting member 8 in the central portion 7' and to terminal portions 7'' to the tank assemblies 3.

Accordingly, during the movement of the vehicle 1, the forces acting on the tank assemblies 3 acts on the terminal portions 7'' thereby discharging the load on the support structure 8 thereby not loading the side members directly. In particular, thanks to the opposed disposition of the terminal portions 7'', torques are furthermore absorbed by the stabilizing road 7.

In view of the foregoing, the advantages of the support system and the vehicle according to the invention are apparent.

Thanks to the provided support system, the loads are balanced between the tank assemblies therefore reducing stress to the chassis.

Indeed, the stabilizing road allows to compensate the loads and the torques acting on the tank assemblies, thereby reducing the stress on the chassis.

Moreover, the support structure allows to support the stabilizing road without imparting further loads to the side members that are therefore less charged with respect to known systems.

Accordingly, the useful life of the chassis is improved without increasing excessively the weight of the vehicle and reducing its useful space.

Moreover, the proposed solution can be applied also to existing vehicle with small modifications and can be adapted to different designs, number and shape of tank assemblies.

Furthermore, the proposed support system is particularly simple in its mounting therefore not interfering excessively with vehicle manufacturing time and costs.

In addition, modal frequencies are increased, thereby reducing the risk of resonance during the use of the vehicle.

Moreover, since load is equilibrated between tank assemblies, the drivability of the vehicle is improved.

It is clear that modifications can be made to the support system and the vehicle as described above which do not extend beyond the scope of protection defined by the claims.

For example, more tanks could be present and more terminal portions can be present, e.g. three of four terminal portions. Alternatively or in combination more stabilizing road can be present.

## Claims

1. Support system (6) for supporting at least a pair of tank assemblies (3) of a vehicle (1), said support system (6) comprising at least one stabilizing road (7) and a supporting structure (8), said stabilizing road (7) being configured to connect together fixedly said tank assemblies (3), said support structure (8) being configured to connect in a movable manner said stabilizing road (7) to said chassis (2).

2. Support system according to claim 1, wherein said stabilizing road (7) comprises a central portion (7') movably connected to said support structure (8) and at least a pair of terminal portions (7'') extending from said central portion (7') along a first axis (B) direction.

3. Support system according to claim 2, wherein said terminal portions (7'') are not coaxial to said central portion (7').

4. Support system according to claim 2 or 3, wherein said terminal portions (7") are respectively placed forwardly and rearwardly with respect to said central portion (7') with respect to said first axis (B) direction.

5. Support system according to any of the preceding claims, wherein said stabilizing road (7) has a continuous circular cross-section.

6. Support system according to any of the preceding claims, wherein said support structure (8) comprises a central portion (8') and a pair of brackets (8"), said brackets (8') defining said movable connection with said stabilizing road (7) and being configured to fix said central portion (8') to said chassis (2).

7. Support system according to claim 6, wherein said brackets (8') define a hinge connection with said stabilizing road (7).

8. Support system according to claim 7, wherein said hinge connection comprises a seat (9) provided with a bushing carried by said brackets (8').

9. Support system according to any of the preceding claims depending on claim 2, further comprising a coupling portion (11) rigidly carried by said terminal portions (7") and configured to allow rigid connection to said tank assembly (3).

10. Vehicle (1) comprising a chassis (2) extending along a second axis (A) and at least a pair of tank assemblies (3) connected together and to said chassis (2) via a support system (6) according to any of the preceding claims.

11. Vehicle according to claim 10 when depending on claim 6, wherein said chassis (2) comprises a pair of side members (2', 2") and a plurality of cross-members (2‴) connecting said side members (2', 2"), said tank assemblies (3) being connected laterally outside said side members (2', 2ʺ) by brackets (5), said central portion (8') being laterally comprised between said side members (2', 2ʺ), said brackets (8'') being fixed laterally outside said side members (2', 2ʺ).

12. Vehicle according to claim 10 or 11, wherein said stabilizing road (7) is placed above said chassis (2), said centra portion (7') is placed between said side members (2', 2ʺ), said terminal portions (7ʺ) being placed outside said side members (2', 2ʺ) along said first axis (B) direction.
